# EUROPEAN PATENT SPECIFICATION

(11) **EP 1 540 230 B1**
(45) Date of publication and mention of the grant of the patent: **01.08.2007**
(21) Application number: 03790763.1
(22) Date of filing: 28.08.2003
(51) Int. Cl.: F16L 23/08

(54) **A CLAMPING STRAP, A PIPE END JOINT AND AN EXHAUST SYSTEM**
SPANNBAND, ROHRENDVERBINDUNG UND ABGASANLAGE
SANGLE DE SERRAGE, JOINTURE D'EXTREMITES DE TUYAUX ET SYSTEME D'ECHAPPEMENT

(30) Priority: 28.08.2002 DK 200201262
(43) Date of publication of application: 15.06.2005
(73) Proprietor: Dinex A/S, 5500 Middelfart (DK)
(72) Inventor: LARSEN, Lars, Christian, DK-5500 Middelfart (DK); Lambe, Peter John, Cheshrie WA 59 UR (GB)
(74) Representative: Dylmer, Henrik
(86) International application number: PCT/DK2003/000565
(87) International publication number: WO 2004/020891

(56) References cited:
- EP-A- 0 616 162
- EP-A- 0 849 518
- DE-A- 2 614 477
- US-A- 4 185 858
- US-A- 4 554 084

## Description

### Technical Field

The invention relates to a clamping strap according to the preamble of claim 1, a pipe end joint according to the preamble of claim 6 as well as to an exhaust system according to the preamble of claim 9. Many different clamping straps as well as methods for joining pipe ends are known. According to a conventional joining method, the two pipe ends are provided with a projecting bead, and the method involves the use of a clamp strap with a recess in which the two pipe end beads can be received.

### Background Art

Thus US-PS No. 6,062,610 discloses a clamping strap according the preamble of claim 1. However, this clamping strap is encumbered with the risk of not being completely tight, such as when the height of one pipe end bead deviates considerably from the height of the other pipe end bead. In the latter case, the sealing band tightly abuts only one bead. In addition, the known clamping strap is encumbered with the draw-back that it can be difficult to mount the clamping strap under narrow conditions. When the pipe ends are accessible from one side only, the positioning of the clamping strap involves a risk of one of the second web members being wedged between the two beads, said web members projecting radially inwards. The latter problem applies in particular when one or even worse when both pipe ends are to be retained in the correct position relative to one another during the mounting procedure.

US-PS No. 3,479,066 discloses a clamping device with two semi circular ring members provided with an interior central recess and a compressible sealing ring. The compressible sealing ring is provided with a rib facing inwards and adapted to extend between the two opposing sides of the pipe ends to be joined. This known clamping device is encumbered with the draw-back that it is rather complicated and presents a relatively limited retaining strength in the axial direction.

### Disclosure of Invention

The object of the invention is to provide a novel and improved clamping strap which is simple and inexpensive to manufacture, which is easy to mount, and which presents good sealing properties.

This object has been obtained by a clampling strap according to claim 1. The resulting seal is more reliable than hitherto known because both the sealing band and the third web members assist in ensuring said seal. In addition, the mounting procedure has been facilitated because the risk of the clamping strap being inserted between the pipe ends during said procedure is low due to the third web members.

According to an embodiment, the clamping strap may be manufactured as a continuous flexible strap with two clamping strap ends interconnected by means of a single tightening means, said tightening means allowing the clamping strap to be clamped about the pipe ends. Such a clamping strap is particularly easy to mount especially under narrow conditions, and a continuous seal is obtained along the entire periphery of the pipe ends.

According to an embodiment, the third web member may be of a width of at least 5 mm measured in the longitudinal direction of the pipes with the result that a particularly good seal as well as an easy mounting procedure are obtained.

The sealing band may according to the invention be made of a woven fibre glass material with the result that the clamping strap can be used at high temperatures, such as in connection with the joining of components in exhaust systems.

According to an embodiment, the clamping strap is cylindrical and accordingly to be used for joining cylindrical pipe ends.

The invention relates furthermore to a pipe end joint where two pipe ends are provided with a bead extending radially outwards from the outer side of the pipe wall, and where a clamping strap according to the invention is clamped about the pipe ends in such a manner that the beads are arranged between the two second web members, and where the third web members abut the outer side of said pipe ends.

According to a preferred embodiment, the beads of the two pipe ends are produced by way of folding.

According to a further embodiment, the folding is established by the end of the pipe wall being folded together with an end plate extending substantially perpendicular to the central axis of the pipes. Such a shaping of a pipe end with such an end plate results in a bead which is particularly suited for use in connection with a clamping strap according to the invention. Furthermore, the clamping strap according to the invention presents significantly lower tolerance requirements to the folding procedure than hitherto known joining methods using a clamping strap.

The invention relates also to an exhaust system for vehicles including an inlet pipe module, an emission treatment module with for instance a particle filter or a catalyst, and an outlet module, and where the emission treatment module is joined at its two ends with the inlet module and the outlet module, respectively, by means of a clamping strap according to the invention. Usually, the exhaust systems for vehicles are positioned at the lower side of said vehicles, and ordinarily the exhaust systems are not accessible from all sides. The clamping strap according to the invention is particularly suited in connection with for instance a replacement of an emission treatment pipe module.

According to an embodiment, the emission treatment module is at its two ends joined with the inlet module and the outlet module, respectively, by means of a pipe end joint according to the invention.

### Brief Description of the Drawing

The invention is explained in greater detail below by means of a preferred embodiment illustrated in the drawing, in which
Fig. 1 shows a section of an exhaust system with three tubular modules joined by means of clamping straps according to the invention,
Fig. 2 is a sectional view taken along the line II-II in Fig. 1, and
Fig. 3 is a sectional view taken along the line III-III in Fig. 1.

### Best Mode for Carrying out the Invention

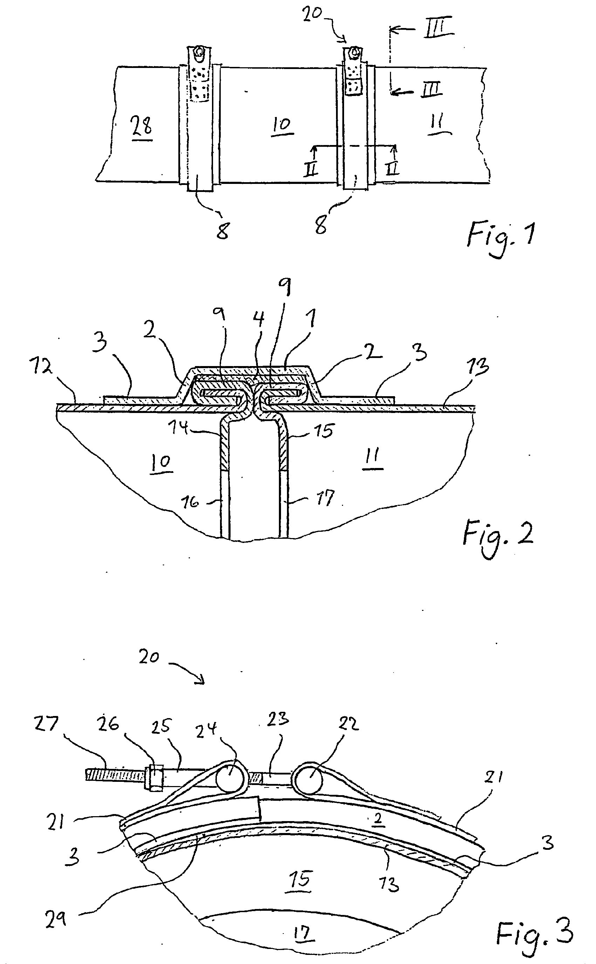

Fig. 1 shows a section of an exhaust system including a tubular inlet module 28, a tubular emission treatment module 10 and a tubular outlet module 11. The emission treatment module 10 is joined with the inlet module 28 and the outlet module 11, respectively, by means of a clamping strap 8 according to the invention.

Fig. 2 is a sectional view taken along the line II-II in Fig. 1. The tubular emission treatment module 10 includes a cylindrical pipe wall 12 and an end wall 14 with a central opening 16. Both the pipe wall 12 and the end plate 14 are made of thin plate, and they are joined together along the periphery of the pipe end in such a manner that a bead 9 is formed, said bead 9 projecting from the outer side of said pipe wall 12. The outlet module 11 includes also a cylindrical pipe wall 13 and an end wall 15 with a central opening 17. The pipe wall 13 and the end wall 15 are also joined together so as to form a projecting bead 9. The clamping strap 8 according to the invention includes a first web member 1 extending parallel to the pipe walls 12, 13, two downwardly inclining second web members 2 connected to the two sides of the first web member 1, as well as two third web members 3 extending from the lower end of each second web member 2 and parallel to the pipe walls 12, 13. The first web member 1 and the two second web members 2 define a recess receiving the two beads 9. A sealing ring or band 4 of compressible material is secured to the bottom of the recess, viz. on the inner side of the web member 1. In the present embodiment the sealing ring 4 is made of woven fibre glass.

As illustrated in Fig. 3 showing a sectional view taken along the line III-III in Fig. 1, the clamping strap 8 includes a tightening means 20 for tightening together the two ends of said clamping strap 8. The tightening means 20 includes a loop-shaped metal strip 21 welded onto the outer side of the first web member 1 at each end of the clamping strap. To the right of Fig. 3, the loop-shaped metal strip 21 retains a first cylindrical member 22 forming one end of a so-called T-bolt 23 with a thread 17. To the left of Fig. 3, the loop-shaped metal strip 21 retains a second cylindrical metal member 24 provided with a cylindrical pipe member 25. A through hole not visible extends through the cylindrical metal member 25 and the cylindrical member 24. The T-bolt 23 extends through the through hole, and a nut 26 is screwed onto the thread 27 of the T-bolt. The cylindrical members 22 and 24 can turn about their central axes in the loop-shaped metal strips 21, and a tightening of the nut 26 renders it possible to tightly fit the clamping strap about the ends of the tubular modules 28, 10, 11.

As illustrated in Fig. 2, a tightening of the clamping strap 8 results in a compression of the sealing ring 4 which accordingly sealingly abut the outer side of the beads 9. As a result, the exhaust gases leaving the emission treatment module 10 through the openings 16 and 17 and entering the outlet module 11 cannot exit between the two beads 9. As illustrated, the third web members 3 abut the outer sides of the pipe walls 12, 13 and provide an additional seal. Such an embodiment is particularly advantageous when one bead 9 does not completely abut the sealing ring 4 due to production tolerances or damages. In addition, the third web members 3 ensure the particular advantage that the mounting of the clamping straps has been facilitated in particular under narrow conditions. A replacement, service or maintenance of the emission treatment module 10 implies that said emission treatment module must be removed from the inlet module 18 and the outlet module 11. When the emission treatment module 10 is to be mounted again, which is done from the bottom side of the vehicle, the clamping straps 8 must be correctly positioned in such a manner that they encircle the beads 9. Had the third web members 3 not been present, a risk would apply of one of the second web members 2 unintentionally being inserted between the beads 9 on the side opposite the mechanic, which would present a particular problem in connection with pipe joints involving pipes with very large diameters. The strap is indeed obliquely arranged relative to a correct position, but it can be hard to see in connection with large pipe diameters because then the clamping strap only forms a small angle with the planes of the pipe ends. Thus the mechanic can unintentionally tighten the clamping strap 8 in the erroneous belief that the strap is correctly positioned. The third web members 3 reduce the risk of such an erroneous mounting considerably.

A replacement of the emission treatment module 10 requires nothing but a loosening and removal of the clamping straps 8. The inlet module 28 and the outlet module 11 need not be removed because no overlapping members apply when seen in the axial direction between said modules and the emission treatment module 10.

Although it is important to achieve a good seal between the emission treatment module 10 and the outlet module 11, it is even more important to achieve a good seal between the inlet module 28 and said emission treatment module because the exhaust gas capable of escaping here is an untreated and therefore very polluting gas.

As illustrated in Fig. 2, the second web members 2 extending radially inwards are inclining. As a result, the ends of the clamping strap can be caused to overlap one another, cf. Fig. 3. As a result of such an overlapping, the web members 3 on the extemally arranged clamping strap end do not abut completely the outer side of the pipe wall 13 and establish accordingly a small gap indicated by means of the reference numeral 29 of Fig. 3. However, a suitable choice of material for both the strap and the sealing ring implies that no significant problem is involved. The overlapping ends ensure that the clamping strap only presents few requirements to the tolerances of the pipe diameter/circumference which can be up to several centimetres.

The sealing ring operates both as a seal and as a compensation for various tolerances concerning the beads 9.

The clamping strap is preferably made of stainless steel, and it can optionally be joined at two locations instead of at one location as illustrated in response to the geometric shape of the circumference of the pipe ends. The clamping strap can also be substantially rectangular, square, triangular or elliptic.

The illustrated embodiment of the clamping strap is made of a 0.5 mm thick stainless steel tape and presents an internal diameter of approximately 280 mm. The distance from the inner side of the first web member to the inner side of the third web member is approximately 4.6 mm. The sealing band is made of woven fibre glass and presents a thickness of approximately 1.5 mm and a width of approximately 24 mm.

The clamping strap is particularly suited for joining several individual pipe sections with folded end plates corresponding to the pipe ends shown in Fig. 2 in such a manner that a long coherent pipe is formed which would otherwise require complicated equipment in case it should have been manufactured in one piece.

## Claims

1. A clamping strap (8) for joining two pipe ends, said clamping strap presenting a shape corresponding to the circumference of the two pipe ends, and where the clamping strap includes a first web member (1) extending parallel to the pipe walls (12, 13), a second web member (2) extending inclined from each side of the first web member (1) and inwards towards the pipe walls, a compressible sealing band (4) arranged on the inner side of the first web member (1) between the two second web members (2) and of a width substantially corresponding to the width of the first web member (1), when seen in use in a cross-sectional direction through the central axis of the pipes (10, 11), **characterised in that** a third web member (3) extends from the innermost end of each of the second web members (2) and parallel to the pipe walls (12, 13), and that the ends of the clamping strap overlap one another.

2. A clamping strap according to claim 1, **characterised in, that** it is made as a continuous, flexible strap with two clamping strap ends interconnected by means of a single tightening means (20), said tightening means allowing the clamping strap (8) to be clamped about the pipe ends.

3. A clamping strap according to claim 1 or 2, **characterised in that** the third web members (3) are of a width of at least 5 mm measured in the longitudinal direction of the pipes.

4. A clamping strap according to one of the preceding claims, **characterised in that** the sealing band (4) is made of a woven fibre glass material.

5. A clamping strap according to one of the preceding claims, **characterised in that** it is cylindrical.

6. A pipe end joint comprising two pipe ends provided with a bead (9) extending radially outwards from the outer side of the pipe walls (12, 3), and a clamping strap (8) according to one of the claims 1 to 5 clamped about the pipe ends in such a manner that the beads (9) are arranged between the two second web members (2), and where the third web members (3) abut the outer side of said pipe ends (12, 13).

7. A pipe end joint according to claim 6, **characterised in that** the beads (9) of one or of both pipe ends are provided by way of folding.

8. A pipe end joint according to claim 7, **characterised in that** the folding is provided by folding the end of the pipe wall (12, 13) together with an end plate (14, 15) extending substantially perpendicular to the central axis of the pipe.

9. An exhaust system for vehicles including a tubular inlet module (28), a tubular emission treatment module (10) with for instance a particle filter or a catalyst, and a tubular outlet module (11), **characterised in that** the emission treatment module (10) is joined at both ends to the inlet module (28) and the outlet module (11), respectively, by means of a clamping strap (8) according to one of the claims 1 to 5.

10. An exhaust system according to claim 8, **characterised in that** the emission treatment module (10) is joined at one or both ends with the inlet module (28) and the outlet module (11), respectively, by means of a pipe end joint according to one of the claims 6 to 8.

## Patentansprüche

1. Klemmband (8) zum Zusammenfügen zweier Rohrenden, wobei das Klemmband eine Form aufweist, die dem Umfang der zwei Rohrenden entspricht, und wobei das Klemmband Folgendes enthält: ein erstes Bahnelement (1), das sich parallel zu den Rohrwänden (12, 13) erstreckt; ein zweites Bahnelement (2), das sich geneigt von jeder Seite des ersten Bahnelements (1) und nach innen in Richtung der Rohrwände erstreckt; ein komprimierbares Dichtungsband (4), das auf der Innenseite des ersten Bahnelements (1) zwischen den zwei zweiten Bahnelementen (2) angeordnet ist und eine Breite hat, die im Wesentlichen der Breite des ersten Bahnelements (1) entspricht, wenn man es während des Gebrauchs in einer Querschnittsrichtung durch die Mittelachse der Rohre (10, 11) betrachtet, **dadurch gekennzeichnet, dass** sich ein drittes Bahnelement (3) von dem am weitesten innen liegenden Ende jedes der zweiten Bahnelemente (2) und parallel zu den Rohrwänden (12, 13) erstreckt und dass die Enden des Klemmbandes einander überlappen.

2. Klemmband nach Anspruch 1, **dadurch gekennzeichnet, dass** es als ein durchgängiges, flexibles Band mit zwei Klemmbandenden gestaltet ist, die mit Hilfe eines einzelnen Straffungsmittels (20) miteinander verbunden sind, wobei das Straffungsmittel es ermöglicht, das Klemmband (8) um die Rohrenden herum zu klemmen.

3. Klemmband nach Anspruch 1 oder 2, **dadurch gekennzeichnet, dass** die dritten Bahnelemente (3) - in der Längsrichtung der Rohre gemessen - eine Breite von mindestens 5 mm aufweisen.

4. Klemmband nach einem der vorangehenden Ansprüche, **dadurch gekennzeichnet, dass** das Dichtungsband (4) aus einem Glasfasergewebematerial besteht.

5. Klemmband nach einem der vorangehenden Ansprüche, **dadurch gekennzeichnet, dass** es zylindrisch ist.

6. Rohrendverbindung, umfassend zwei Rohrenden, die mit einer Bördelung (9) versehen sind, die sich von der Außenseite der Rohrwände (12, 3) radial nach außen erstreckt, und ein Klemmband (8) nach einem der Ansprüche 1 bis 5, das so um die Rohrenden herum geklemmt ist, dass die Bördelungen (9) zwischen den zwei zweiten Bahnelementen (2) angeordnet sind, und wo die dritten Bahnelemente (3) gegen die Außenseite der Rohrenden (12, 13) stoßen.

7. Rohrendverbindung nach Anspruch 6, **dadurch gekennzeichnet, dass** die Bördelungen (9) eines Rohrendes oder beider Rohrenden durch Falzen hergestellt sind.

8. Rohrendverbindung nach Anspruch 7, **dadurch gekennzeichnet, dass** das Falzen durch Falzen des Endes der Rohrwand (12, 13) zusammen mit einer Endplatte (14, 15) erfolgt, die sich im Wesentlichen im rechten Winkel zur Mittelachse des Rohres erstreckt.

9. Abgasanlage für Fahrzeuge, die ein rohrförmiges Einlassmodul (28), ein rohrförmiges Emissionsbehandlungsmodul (10) mit zum Beispiel einem Partikelfilter oder Katalysator und ein rohrförmiges Auslassmodul (11) enthält, **dadurch gekennzeichnet, dass** das Emissionsbehandlungsmodul (10) an beiden Enden an das Einlassmodul (28) bzw. an das Auslassmodul (11) mittels eines Klemmbandes (8) nach einem der Ansprüche 1 bis 5 angefügt ist.

10. Abgasanlage nach Anspruch 8, **dadurch gekennzeichnet, dass** das Emissionsbehandlungsmodul (10) an einem oder an beiden Enden mit dem Einlassmodul (28) bzw. dem Auslassmodul (11) mittels einer Rohrendverbindung nach einem der Ansprüche 6 bis 8 verbunden ist.

## Revendications

1. Sangle de serrage (8) destinée à raccorder deux extrémités de tuyaux, ladite sangle de serrage présentant une forme correspondant à la circonférence des deux extrémités de tuyaux, la sangle de serrage comprenant un premier élément de toile (1) s'étendant parallèlement aux parois de tuyaux (12, 13), un deuxième élément de toile (2) s'étendant de manière inclinée depuis chaque côté du premier élément de toile (1) et vers l'intérieur en direction des parois de tuyaux, une bande de scellage compressible (4) agencée sur le côté intérieur du premier élément de toile (1) entre les deux deuxièmes éléments de toile (2) et ayant une largeur correspondant sensiblement à la largeur du premier élément de toile(1), lorsqu'on l'observe en cours d'utilisation dans le sens de la section en coupe à travers l'axe central des tuyaux (10, 11), **caractérisée en ce qu'**un troisième élément de toile (3) s'étend à partir de l'extrémité la plus à l'intérieur de chacun des deuxièmes éléments de toile (2) et parallèlement aux parois de tuyaux (12, 13) et **en ce que** les extrémités de la sangle de serrage sont superposées les unes aux autres.

2. Sangle de serrage selon la revendication 1, **caractérisée en ce qu'**elle se présente sous la forme d'une sangle flexible continue présentant deux extrémités de sangle de serrage interconnectées à l'aide d'un moyen de serrage unique (20), ledit moyen de serrage permettant à la bande de serrage (8) d'être serrée autour des extrémités de tuyau.

3. Sangle de serrage selon la revendication 1 ou 2, **caractérisée en ce que** les troisièmes éléments de toile (3) ont une largeur d'au moins 5 mm mesurée dans le sens longitudinal des tuyaux.

4. Sangle de serrage selon l'une quelconque des revendications précédentes, **caractérisée en ce que** la bande de scellage (4) est constituée d'un matériau en fibres de verre tissées.

5. Sangle de serrage selon l'une quelconque des revendications précédentes, **caractérisée en ce qu'**elle est cylindrique.

6. Jointure d'extrémités de tuyaux comprenant deux extrémités de tuyaux munies d'un bourrelet (9) s'étendant radialement vers l'extérieur depuis le côté extérieur des parois de tuyaux (12, 3) et une sangle de serrage (8) selon l'une quelconque des revendications 1 à 5 serrée autour des extrémités de tuyaux de manière à ce que les bourrelets (9) soient agencés entre les deux deuxièmes éléments de toile (2) et les troisièmes éléments de toile (3) étant aboutés contre le côté extérieur desdites extrémités de tuyaux (12, 13).

7. Jointure d'extrémités de tuyaux selon la revendication 6, **caractérisée en ce que** les bourrelets (9) d'une extrémité de tuyau ou des deux est ou sont produit(s) par pliage.

8. Jointure d'extrémités de tuyaux selon la revendication 7, **caractérisée en ce que** le pliage est fourni en pliant l'extrémité de la paroi de tuyau (12, 13) avec une plaque d'extrémité (14, 15) s'étendant de manière sensiblement perpendiculaire à l'axe central du tuyau.

9. Système d'échappement pour véhicules comprenant un module d'entrée tubulaire (28), un module de traitement des émissions tubulaire (10) comportant par exemple un filtre à particules ou un catalyseur, et un module de sortie tubulaire (11), **caractérisé en ce que** le module de traitement des émissions (10) est raccordé au niveau des deux extrémités au module d'entrée (28) et au module de sortie (11), respectivement, à l'aide d'une bande de serrage (8) selon l'une des revendications 1 à 5.

10. Système d'échappement selon la revendication 8, **caractérisé en ce que** le module de traitement des émissions (10) est raccordé au niveau d'une extrémité ou des deux au module d'entrée (28) et au module de sortie (11), respectivement, à l'aide d'une jointure d'extrémités de tuyaux selon l'une des revendications 6 à 8.
